(19) Europäisches Patentamt
European Patent Office
Office européen des brevets

(11) Veröffentlichungsnummer: 0 059 895
B1

(12) # EUROPÄISCHE PATENTSCHRIFT

(45) Veröffentlichungstag der Patentschrift: **17.04.85**

(51) Int. Cl.⁴: **C 09 D 5/44**, C 25 D 13/06, C 08 G 59/02, C 08 G 59/14

(21) Anmeldenummer: **82101469.3**

(22) Anmeldetag: **26.02.82**

(54) **Wasserdispergierbare Bindemittel für kationische Elektrotauchlacke und Verfahren zu ihrer Herstellung.**

(30) Priorität: **04.03.81 DE 3108073**

(43) Veröffentlichungstag der Anmeldung: **15.09.82 Patentblatt 82/37**

(45) Bekanntmachung des Hinweises auf die Patenterteilung: **17.04.85 Patentblatt 85/16**

(84) Benannte Vertragsstaaten: **AT BE CH DE FR GB IT LI NL SE**

(56) Entgegenhaltungen:
**EP-A-0 000 086**
**FR-A-2 194 797**
**FR-A-2 268 059**
**FR-A-2 338 297**
**FR-A-2 376 197**

(73) Patentinhaber: **BASF Farben + Fasern Aktiengesellschaft, Am Neumarkt 30, D-2000 Hamburg 70 (DE)**

(72) Erfinder: **Diefenbach, Horst, Dr. Dipl.-Chem., Lerchenhain 8, D-4405 Nottuln (DE)**
Erfinder: **Dobbelstein, Arnold, Dr. Dipl.-Chem., Emil-Nolde-Weg 95, D-4400 Münster (DE)**
Erfinder: **Geist, Michael, Dr. Dipl.-Chem., Rubensstrasse 251, D-4400 Münster (DE)**

(74) Vertreter: **Habbel, Hans-Georg, Dipl.-Ing., Postfach 3429 Am Kanonengraben 11, D-4400 Münster (DE)**

EP 0 059 895 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft wasserdispergierbare Bindemittel für kationische Elektrotauchlacke auf der Basis von modifizierten Epoxidharzen, die Ammonium-, Sulfonium- und/oder Phosphoniumgruppen enthalten.

Kationische wasserdispergierbare Kunstharze als Bindemittel für Elektrotauchlacke sind bekannt. So beschreibt z. B. die DE-A-2 701 002 bzw. die FR-A-2 338 297 ein derartiges Harz, das ein Reaktionsprodukt von einem Polyepoxid mit einem Molekulargewicht von mindestens 350, einem sekundären Amin und einem organischen Polyol mit mindestens zwei alkoholischen primären Hydroxylgruppen ist. Die Harze entstehen durch Kettenverlängerung von hochmolekularen Polyepoxiden mit mindestens 2 Epoxidgruppen pro Molekül. Die Kettenverlängerung wird durch ein organisches Polyol erreicht und die Wasserdispergierbarkeit wird durch Anlagerung eines sekundären Amins erzielt.

Dieses und andere bekannte Kunstharze für die kathodische Elektrotauchlackierung werden häufig für Grundierungen eingesetzt, d. h. die mit ihnen beschichteten Gegenstände erhalten eine zusätzliche Decklackschicht. Nachteilig können jedoch mit den bisher bekannten Harzen nur Beschichtungen mit relativ geringer Schichtdicke erreicht werden. So werden in der DE-A-2 701 002 erreichbare Schichtdicken von nur 11,4—18 µm angegeben. Wenn an eine Lackierung besonders hohe Anforderungen hinsichtlich der Korrosionsbeständigkeit und der Oberflächengüte gestellt werden, wie es z. B. bei der Lackierung von Kraftwagen und anderen hochwertigen Gütern der Fall ist, ist es daher bisher üblich, zwischen der Elektrotauchgrundierung und dem Decklack als zusätzliche Schicht einen sogenannten Füller aufzubringen. Dies ist aufwendig und kostenintensiv. Daher ist es wünschenswert, das Elektrotauchlackierverfahren so zu verbessern, daß bei diesem Verfahren größere Schichtdicken erreicht werden können. Wie bereits oben ausgeführt, ist das mit den bisher bekannten kationischen Kunstharzen jedoch nicht möglich. Die Probleme ergeben sich daraus, daß bei einer Erhöhung der Abscheidespannung über die Durchbruchspannung hinaus Oberflächenstörungen im Film durch Aufreißen der Schicht auftreten. Die Verlängerung der Beschichtungszeit ergibt ebenfalls eine Steigerung der Schichtdicke, doch läßt sich diese Steigerung nicht beliebig fortführen, denn es besteht normalerweise aufgrund des elektrischen Widerstandes des abgeschiedenen Films eine obere Grenze der Schichtdicke, bei der auch bei noch so langem Beschichten praktisch kein Schichtstärkenzuwachs mehr erreicht wird.

Die FR-A-2 376 197 beschreibt kationische Harze für die elektrophoretische Abscheidung, die aus Epoxidverbindungen durch Kettenverlängerung mit Polyolen hergestellt und durch Umsetzung mit Aminen solubilisierbar gemacht worden sind. Diese Arbeitsweise entspricht dem Stand der Technik, der in ähnlicher Form aus der DE-A-2 701 002 bekannt ist.

Die FR-A-2 268 059 beschreibt die Herstellung von wasserverdünnbaren Bindemitteln durch Kettenverlängerung einer Epoxidverbindung mit Polyolen und Umsetzung mit einem Amin zur Erzielung der Wasserverdünnbarkeit. Auch hier werden nur geringe Schichtdicken erreicht.

Überraschenderweise wurde nun gefunden, daß bei der Elektrotauchlackierung größere Schichtdicken erzielt werden können, wenn Bindemittel auf Basis von modifizierten Epoxidharzen verwendet werden, die aromatische und aliphatische bzw. alcicyclische Gruppen in bestimmten Verhältnissen enthalten.

Der Erfindung liegt daher die Aufgabe zugrunde, wasserdispergierbare Bindemittel für kationische Elektrotauchlacke anzugeben, bei deren Verwendung größere Schichtdicken erzielt werden können.

Diese Aufgabe wird bei Bindemitteln der eingangs genannten Art erfindungsgemäß dadurch gelöst, daß sie erhalten worden sind durch Umsetzung von

(A) niedermolekularen, aromatischen Gruppen enthaltenen Epoxidharzen mit einem Epoxidäquivalentgewicht unter 375,
(B) aliphatischen und/oder alicyclischen polyfunktionellen Alkoholen und/oder Carbonsäuren mit einem Molekulargewicht unter 350, wobei das Umsetzungsprodukt aus A und B einen Gehalt an aromatischen Gruppen, berechnet als Phenylengruppe, von 10—45% enthält, weitere Umsetzung mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 und weitere Umsetzung mit
(D) primären, sekundären und/oder tertiären Aminen und/oder deren Salzen oder einer Sulfid-Säuremischung oder eine Phosphin/Säuremischung.

Bei der Herstellung der erfindungsgemäßen Bindemittel wird zunächst aus dem Epoxidharz (A) und aus niedermolekularen Polyolen (B) ein Zwischenprodukt hergestellt, das in einem weiteren mit höhermolekularen Verbindungen (C) weiter umgesetzt wird. Hierdurch entstehen sequenzierte Bindemittel, während nach dem Stand der Technik eine zufällige Verteilung der Einzelkomponenten über das Bindemolekül gegeben ist.

Das Zwischenprodukt aus (A) und (B) weist einen Anteil an aromatischen Gruppen von 10 bis 45%, berechnet als Phenylengruppe, auf. Das hierdurch gegebene Verhältnis zwischen aliphatischen bzw.

alicyclischen und aromatischen Anteilen führt im Zusammenhang mit der genannten Sequenzierung der Harze zu dickschichtigen Überzügen.

Für die Komponente A — niedermolekulare, aromatische Gruppen enthaltende Epoxidharze mit einem Epoxidäquivalentgewicht unter 375 — sind Polyepoxide geeignet. Als Polyepoxide können bei der vorliegenden Erfindung Materialien verwendet werden, die zwei oder mehr Epoxidgruppen im Molekül enthalten. Bevorzugt sind Verbindungen mit zwei Epoxidgruppen im Molekül. Die Polyepoxide haben ein relativ niedriges Molekulargewicht von höchstens 750, bevorzugt 400—500. Die Polyepoxide können zum Beispiel Polyglycidylether von Polyphenolen sein, wie Bisphenole, vorteilhaft z. B. Bisphenol A. Man kann diese Polyepoxide durch Veretherung eines Polyphenols mit einem Epihalohydrin in Gegenwart von Alkali herstellen. Beispiele für geeignete Phenolverbindungen sind

Bis(4-hydroxyphenyl)-2,2-propan, 4,4'-Dihydroxybenzophenon, Bis(4-hydroxyphenyl)-1,1-ethan, Bis(4-hydroxyphenyl)-1,1-isobutan, Bis(4-hydroxy-tertiärbutyl-phenyl)-2,2-propan, Bis(2-hydroxynaphthylmethan, 1,5-Dihydroxynaphthalin und Hydantoinepoxide.

Eine andere geeignete Klasse von Polyepoxiden sind Polyglycidylether von phenolischen Novolakharzen.

Vorteilhaft können auch Polyglycidylester von aromatischen Polycarbonsäuren verwendet werden.

Als Komponente B werden aliphatische und/oder alicyclische polyfunktionelle Alkohole oder Carbonsäuren mit einem Molekulargewicht unter 350 eingesetzt. Vorteilhaft weisen diese eine verzweigte aliphatische Kette, insbesondere mit mindestens einer Neostruktur, auf.

Geeignete Verbindungen entsprechen der folgenden allgemeinen Formel:

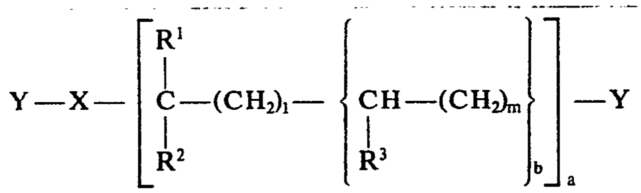

Hierin bedeuten

Y = OH, COOH
X = $(CH_2)_n$

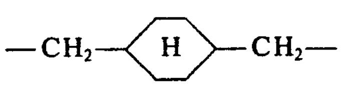

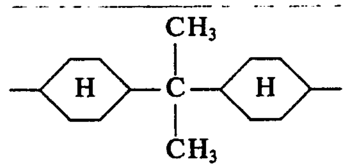

$R^1$, $R^2$, $R^3$ = H, Alkylrest mit 1 bis 5 C-Atomen

a = 0; 1
b = 0; 1
l = 0—10
m, n = 1—10

Als Beispiele seien genannt:

Diole, wie

Ethylenglykol, Diglykol, Dipropylenglykol, Dibutylenglykol, Triglykol, 1,2-Propandiol, 1,3-Propandiol, 2,2-Dimethyl-1,3-propandiol, 2,2-Diethyl-1,3-propandiol, 2-Methyl-2-ethyl-1,3-propandiol, 2-Methyl-2-propyl-1,3-propandiol, 2-Ethyl-2-butyl-1,3-propandiol, 1,2-Butandiol, 1,4-Butandiol, 2,3-Butandiol, 2-Ethyl-1,4-butandiol, 2,2-Diethyl-1,3-butandiol, Buten-2-diol-1,4, 1,2-Pentandiol, 1,5-Pentandiol, 3-Methyl-1,5-Pentandiol, 1,6-Hexandiol, 2,5-Hexandiol, 2-Ethyl-1,3-hexandiol, 2,5-Dimethyl-2,5-hexandiol, 1,3-Octandiol, 4,5-Nonandiol, 2,10-Decandiol, 2-Hydroxyethylhydroxyacetat, 2,2-Dimethyl-3-hydroxypropyl-2,2-dimethylhydroxypropionat, 2-Methyl-2-propyl-3-hydroxypropyl-2-methyl-2-propylhydroxypropionat, 4,4'-Methylenbiscyclohexanol und 4,4'-Isopropylidenbiscyclohexanol.

Einige bevorzugte Diole sind

2,2-Dimethyl-1,3-propandiol, 3-Methyl-1,5-pentandiol, 2,2-Dimethyl-3-hydroxypropyl-2,2-dimethylhydroxypropionat und 4,4'-Isopropylidenbiscyclohexanol.

Als Carbonsäuren kommen eine Vielzahl von Dicarbonsäuren in Betracht, wie Oxalsäure, Malonsäure, 2,2-Dimethylmalonsäure, Bernsteinsäure, Glutarsäure, Adipinsäure, Hexahydrophthalsäure, Maloinsäure, Fumarsäure, Pimelinsäure, Korksäure, Azelainsäure, Sebazinsäure, Itakonsäure, Citrakonsäure, Mesakonsäure und Glutakonsäure.

Bevorzugt eingesetzte Dicarbonsäuren sind z. B. 2,2-Dimethylmalonsäure und Hexahydrophthalsäure.

Wesentlich ist es, daß die Verbindungen der Komponente B in einem solchen Verhältnis mit der Komponente A umgesetzt werden, daß das Umsetzungsprodukt den angegebenen Gehalt an aromatischen Gruppen, berechnet als Phenylengruppe, von 10—45% aufweist.

Zur Herstellung des Reaktionsproduktes wird noch die Komponente C mitverwendet. Ihr Anteil an dem gesamten Bindemittel beträgt vorteilhafterweise 10—50 Gewichtsprozent.

Die als Komponente C geeigneten polyfunktionellen Alkohole, Carbonsäure und SH-Verbindungen haben ein Molekulargewicht von 500—5000, bevorzugt von 530—3000. Die bei der Erfindung in Betracht kommenden Polyole schließen Diole, Triole und höhere polymere Polyole wie Polyesterpolyole, Polyätherpolyole ein. Besonders bevorzugt sind Polyesterpolyole und unter ihnen die Polycaprolactonpolyole.

Für die Komponente C geeignete Polyalkylenetherpolyole entsprechen der folgenden Formel:

$$H{-}\left[O(CHR)_n\right]_m{-}OH$$

in der R = Wasserstoff oder ein niedriger Alkylrest, gegebenenfalls mit verschiedenen Substituenten, ist, n = 2 bis 6 und m = 10 bis 50 oder noch höher ist. Beispiele sind Poly(oxytetramethylen)glykole und Poly(oxyethylen)glykole.

Die bevorzugten Polyalkylenetherpolyole sind Poly(oxytetramethylen)glykole mit einem Molekulargewicht im Bereich von 500 bis 3000.

Die Polyesterpolyole können ebenfalls als polymere Polyolkomponente (Komponente C) bei der Erfindung verwendet werden. Man kann die Polyesterpolyole durch Polyveresterung von organischen Polycarbonsäuren oder ihren Anhydriden mit organischen Polyolen, die primäre Hydroxylgruppen enthalten, herstellen. Üblicherweise sind die Polycarbonsäuren und die Polyole aliphatische oder aromatische Dicarbonsäuren und Diole.

Die zur Herstellung der Polyester verwendeten Diole schließen Alkylenglykole wie Ethylenglykol, Butylenglykol, Neopentylglykol und andere Glykole wie Cyclohexandimethanol ein.

Die Säurekomponente des Polyesters besteht in erster Linie aus niedermolekularen Carbonsäuren oder ihren Anhydriden mit 2 bis 18 Kohlenstoffatomen im Molekül.

Geeignete Säuren sind beispielsweise Phthalsäure, Isophthalsäure, Terephthalsäure, Tetrahydrophthalsäure, Hexahydrophthalsäure, Adipinsäure, Azelainsäure, Sebazinsäure, Maleinsäure, Glutarsäure, Hexachlorheptandicarbonsäure und Tetrachlorphthalsäure. Anstelle dieser Säuren können auch ihre Anhydride, soweit diese existieren, verwendet werden.

Ferner lassen sich bei der Erfindung auch Polyesterpolyole, die sich von Lactonen ableiten, als Komponente C benutzen. Diese Produkte erhält man durch die Umsetzung eines ε-Caprolactons mit einem Polyol. Solche Produkte sind in der US-PS 3 169 945 beschrieben.

Die Polylactonpolyole, die man durch diese Umsetzung erhält, zeichnen sich durch die Gegenwart einer endständigen Hydroxylgruppe und durch wiederkehrende Polyesteranteile, die sich von dem Lacton ableiten, aus. Diese wiederkehrenden Molekülanteile können der Formel

$$-\overset{\overset{\displaystyle O}{\|}}{C}-(CHR)_n-CH_2O-$$

entsprechen, in der n mindestens 4, bevorzugt 54 bis 6, ist und der Substituent Wasserstoff, ein Alkylrest, ein Cycloalkylrest oder ein Alkoxyrest ist, wobei kein Substituent mehr als 12 Kohlenstoffatome enthält und die gesamte Anzahl der Kohlenstoffatome in dem Substituenten in dem Lactonring 12 nicht übersteigt.

Das als Ausgangsmaterial verwendete Lacton kann ein beliebiges Lacton oder eine beliebige Kombination von Lactonen sein, wobei dieses Lacton mindestens 6 Kohlenstoffatome in dem Ring enthalten sollte, zum Beispiel 6 bis 8 Kohlenstoffatome und wobei mindestens 2 Wasserstoffsubstituenten an dem Kohlenstoffatom vorhanden sein sollten, das an die Sauerstoffgruppe des Rings gebunden ist. Das als Ausgangsmaterial verwendete Lacton kann durch die folgende allgemeine Formel dargestellt werden:

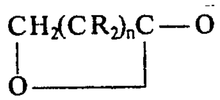

in der n und R die bereits angegebene Bedeutung haben.

Die bei der Erfindung für die Herstellung der Polyesterpolyole bevorzugten Lactone sind die ε-Caprolactone, bei denen n den Wert 4 hat. Das am am meisten bevorzugte Lacton ist das unsubstituierte ε-Caprolacton, bei dem n den Wert 4 hat und alle R-Substituenten Wasserstoff sind. Dieses Lacton wird besonders bevorzugt, da es in großen Mengen zur Verfügung steht und Überzüge mit ausgezeichneten Eigenschaften ergibt. Außerdem können verschiedene andere Lactone einzeln oder in Kombination benutzt werden.

Beispiele von geeigneten aliphatischen Diolen schließen ein Ethylenglykol, 1,3-Propandiol, 1,4-Butandiol, 1,5-Cyclohexandimethanol. Ein Beispiel eines geeigneten aliphatischen Triols ist Trimethylolpropan. Die bevorzugten Polycaprolactonpolyole haben Molekulargewichte im Bereich von 530 bis 3000.

Die Polyurethane stellen eine andere Klasse von Harzen oder Polymeren dar, die als Komponente C verwendet werden können. Die Polyurethane sind bekanntlich Polyaddukte von Polyisocyanaten und einer Verbindung mit mindestens zwei reaktionsfähigen Wasserstoffatomen, das heißt Wasserstoffatomen, die sich durch die Methode von Zerewitinoff nachweisen lassen.

Beispiele von geeigneten Verbindungen mit aktiven Wasserstoffatomen sind Polyester aus Polycarbonsäuren und mehrwertigen Alkoholen, mehrwertige Polyalkylenether mit mindestens zwei Hydroxygruppen, Polythioetherglykole und Polyesteramide.

Die für die Herstellung der Polyurethane verwendeten Polyester oder Polyesteramide können verzweigt und/oder linear sein, zum Beispiel Ester von Adipinsäure, Sebazinsäure, 6-Aminocapronsäure, Phthalsäure, Isophthalsäure, Terephthalsäure, Oxalsäure, Malonsäure, Bernsteinsäure, Maleinsäure, Cyclohexan-1,2-dicarbonsäure, Cyclohexan-1,4-dicarbonsäure, Polyacrylsäure, Naphthalin-1,2-dicarbonsäure, Fumarsäure oder Itakonsäure, mit Polyalkoholen, wie Ethylenglykol, Diethylenglykol, Pentaglykol, Glycerin, Sorbit, Triethanolamin, Di-(β-hydroxyethyl)ether und/oder Aminoalkoholen, wie Ethanolamin, 3-Aminopropanol, 5-Aminopentanol-1, 10-Aminodecanol, 6-Amino-5-methylhexanol-1, p-Hydroxymethylbenzylamin oder mit Mischungen dieser Polyalkohole und Aminen, wie Ethylendiamin, 3-Methylhexamethylendiamin, Decamethylendiamin und m-Phenylendiamin und/oder Aminoalkoholen. Bei der Veresterung oder der Amidbildung kann die Säure als solche oder eine äquivalente Verbindung, wie das Säurehalogenid oder Säureanhydrid verwendet werden.

Für die Herstellung der Polyurethane können beispielsweise als Alkylenglykol oder Polyoxyalkylen- oder Polythioalkylenglykol folgende Verbindungen verwendet werden: Ethylenglykol, Propylenglykol, Butylenglykol, 2-Methylpentandiol-2,4, 2-Ethylhexandiol-1,3, Hexamethylenglykol, Styrolglykol, Diethylenglykol, Tetraethylenglykol, Polythioethylenglykol, Polyethylenglykol 200, 400, 600 und höher, Dipropylenglykol, Tripropylenglykol, Trithiopropylenglykol, Polypropylenglykol 400, 750, 1200, 2000 und höher.

Für die Herstellung der Polyurethane können infolgedessen beliebige Polyester, mit Polyisocyanat modifizierte Polyester, Polyesteramide, mit Polyisocyanat modifizierte Polyesteramide, Alkylenglykole, mit Polyisocyanat modifizierte Alkylenglykole, Polyoxyalkylenglykole und mit Polyisocyanat modifizierte Polyoxyalkylenglykole, die freie reaktionsfähige Wasserstoffatome, freie reaktionsfähige Carboxylgruppen und/oder insbesondere Hydroxylgruppen haben, verwendet werden. Insbesondere kann jede organische Verbindung benutzt werden, die mindestens zwei Reste aus der Klasse der Hydroxyl- und Carboxylgruppe haben.

Beispiele von geeigneten organischen Polyisocyanaten für die Herstellung der Polyurethane sind
Ethylendiisocyanat, Propylen-1,2-diisocyanat, Cyclohexylendiisocyanat, m-Phenylendiisocyanat,
2,4-Toluoldiisocyanat, 3,3'-Dimethoxy-4,4'-biphenylendiisocyanat,
3,3'-Dichlor-4,4'-biphenylendiisocyanat, Triphenylmethantriisocyanat, 1,5-Naphthalindiisocyanat,
hydriertes Toluylendiisocyanat, Methylen-bis(cyclohexylisocyanat), Isophorondiisocyanat,
Trimethylhexamethylendiisocyanat, Lysindiisocyanat-methylester oder Polyisocyanate
in blockierter bzw. verkappter bzw. inaktiver Form, wie die Bisphenylcarbonate von Toluylendiisocyanat und 1,5-Naphthalindiisocyanat.

Als polyfunktionelle SH-Verbindungen (Komponente C) kommen Umsetzungsprodukte von organischen Dihalogeniden mit Natriumpolysulfid in Betracht. Weitere SH-Verbindungen sind z. B. Umsetzungsprodukte von hydroxylgruppenhaltigen, linearen Polyestern, Polyethern oder Polyurethanen mit Mercaptocarbonsäuren wie Mercaptoessigsäure, 2-Mercaptopropionsäure, 3-Mercaptopropionsäure, Mercaptobuttersäure und ähnliche.

Das für die Umsetzung mit der Epoxidverbindung als Komponente D verwendete Amin kann primär, sekundär oder tertiär sein, wobei sekundäre Amine sich besonders gut eignen. Primäre und sekundäre Amine können direkt an den Epoxidring angelagert werden, tertiäre nur in Form ihrer Ammoniumsalze oder über eine weitere funktionelle Gruppe im Molekül. Bevorzugt sollte das Amin eine in Wasser lösliche Verbindung sein. Beispiele solcher Amine sind Mono- und Dialkylamine, wie Methylamin, Äthylamin, Propylamin, Butylamin, Dimethylamin, Diäthylamin, Dipropylamin, Methylbutylamin und

dergleichen. Geeignet sind ebenfalls Alkanolamine wie z. B. Methylethanolamin, Diethanolamin und dergleichen. Ferner sind Dialkylaminoalkylamine wie z. B. Dimethylaminoethylamin, Diethylaminopropylamin und dergleichen geeignet.

In den meisten Fällen werden niedermolekulare Amine verwendet, doch ist es auch möglich, höhermolekulare Monoamine anzuwenden, insbesondere dann, wenn die Absicht besteht, die Flexibilität des Harzes durch den Einbau solcher Amine zu erhöhen. In ähnlicher Weise kann man auch Mischungen aus niedermolekularen und höhermolekularen Aminen zur Modifizierung der Harzeigenschaften verwenden.

Polyamine mit primären und sekundären Aminogruppen können in Form ihrer Ketimine mit den Epoxidgruppen umgesetzt werden. Die Ketimine werden aus den Polyaminen in bekannter Weise hergestellt.

Die Amine können auch noch andere Gruppen enthalten, doch sollen diese die Umsetzung des Amins mit der Epoxygruppe nicht stören und auch nicht zu einer Gelierung der Reaktionsmischung führen.

Die Umsetzung des Amins mit der epoxygruppenhaltigen Verbindung tritt häufig schon beim Vermischen dieser Materialien ein. Es kann aber gegebenenfalls eine Erwärmung auf mäßig erhöhte Temperaturen wünschenswert sein, z. B. auf 50 bis 150° C, doch sind Umsetzungen auch bei niedrigeren und höheren Temperaturen möglich. Häufig ist es vorteilhaft, zur Beendigung der Umsetzung die Temperatur gegen das Ende der Reaktion mindestens geringfügig für eine ausreichende Zeit zu erhöhen, um eine vollständige Umsetzung sicherzustellen.

Für die Umsetzung mit der epoxyhaltigen Verbindung sollte mindestens eine solche Menge an Amin verwendet werden, daß das Harz kationischen Charakter annimmt, d. h., daß es unter dem Einfluß einer Spannung in dem Beschichtungsbad zu der Kathode wandert, wenn es durch Zugabe einer Säure löslich gemacht worden ist. Es können im wesentlichen alle Epoxygruppen des Harzes mit einem Amin umgesetzt werden. Es ist aber auch möglich, überschüssige Epoxygruppen in dem Harz zu belassen, die bei der Berührung mit Wasser unter Bildung von Hydroxylgruppen hydrolisieren.

Eine weitere Möglichkeit, die erforderliche Wasserdispergierbarkeit zu erzielen, besteht darin, als Komponente D Mannich-Basen, d. h. Umsetzungsprodukte geeigneter, zur Reaktion mit einem Epoxidring geeignete Gruppen tragender Phenole mit Formaldehyd und einem sekundären Amin, zu verwenden. Hierdurch wird das Bindemittel gleichzeitig selbstvernetzbar.

Anstelle der genannten Amine oder zusammen mit diesen können auch das Salz eines Amins oder eine Sulfid/Säure- oder Phosphin/Säuremischung verwendet werden. Als Salz eines Amins kann das Salz eines tertiären Amins verwendet werden. Zur Neutralisation der Amine geeigneter Säuren, die bei der Erfindung verwendet werden können, schließen Borsäure oder andere Säuren mit einer größeren Dissoziationskonstante als Borsäure ein, bevorzugt organische Säuren mit einer Dissoziationskonstante von größer als etwa $1 \times 10^{-5}$. Die bevorzugte Säure ist Milchsäure. Beispiele von anderen Säuren sind Ameisensäure, Essigsäure, Propionsäure, Buttersäure, Salzsäure, Phosphorsäure, Schwefelsäure und Kohlensäure.

Der Aminanteil des Amin-Säuresalzes ist ein Amin, das unsubstituiert oder substituiert wie im Falle des Hydroxylamins sein kann, wobei diese Substituenten die Umsetzung des Amin-Säuresalzes mit dem Polyepoxid nicht stören sollen und die Reaktionsmischung nicht gelieren sollen. Bevorzugte Amine sind tertiäre Amine, wie Dimethylethanolamin, Triethylamin, Trimethylamin, Triisopropylamin und dergleichen. Beispiele von anderen geeigneten Aminen sind in der US-PS 3 839 252 in Spalte 5, Zeile 3 bis Spalte 7, Zeile 42 angegeben.

Die Amin-Säuresalzmischung wird durch Umsetzung des Amins mit der Säure in bekannter Weise erhalten. Es können auch Amin-Säuremischungen verwendet werden, obwohl sie in der Regel unter Bildung des Säuresalzes reagieren.

Die Reaktionstemperatur für die Umsetzung der Amin-Säuresalze mit den Polyepoxiden kann zwischen der niedrigsten Temperatur, bei der die Umsetzung mit einer nennenswerten Geschwindigkeit verläuft, zum Beispiel Raumtemperatur oder in der Regel etwas höher als Raumtemperatur, bis zu einer maximalen Temperatur zwischen etwa 100 und etwa 110° C variiert werden. Ein Lösungsmittel ist bei der Umsetzung nicht erforderlich, obwohl es häufig zugegeben wird, um die Reaktion besser steuern zu können. Als Lösungsmittel kommen aromatische Kohlenwasserstoffe oder Monoalkyläther von Ethylenglykol in Betracht.

Das Verhältnis zwischen dem Amin-Säuresalz und der Epoxyverbindung kann schwanken und die optimalen Verhältnisse hängen von den speziellen Ausgangsstoffen ab. Im allgemeinen können etwa 1 bis etwa 50 Gewichtsteile Salz auf 100 Gewichtsteile Polyepoxid verwendet werden. Im allgemeinen wird das Verhältnis in Abhängigkeit von dem sich vom Quarternisierungsmittel ableitenden Stickstoffgehalt gewählt, der typischerweise etwa 0,05 bis etwa 16%, bezogen auf das Gesamtgewicht des Aminsalzes und des Polyepoxides ausmacht.

Die Harze enthalten im allgemeinen den gesamten Stickstoff in Form von chemisch gebundenen quaternären Ammoniumsalzgruppen, obwohl in manchen Fällen weniger als 100% des Stickstoffs in Form von quaternären Ammoniumsalzgruppen vorliegt. Ein Beispiel für einen derartigen Fall liegt dann vor, wenn primäre und sekundäre Amine zur Herstellung der Harze mit quaternären Ammoniumsalzgruppen verwendet werden. Solche Harze enthalten in der Regel sekundäre und tertiäre Aminsalzgruppen.

Harze mit Phosphoniumgruppen kann man herstellen, indem man die vorstehend charakterisierten Epoxidverbindungen mit einem Phosphin in Gegenwart einer Säure unter Bildung eines Harzes mit einer Gruppe einer quaternären Phosphoniumbase umsetzt.

Das verwendete Phosphin kann ein beliebiges Phosphin sein, das keine störende Gruppen enthält. Beispiele solcher Phosphine sind aliphatische, aromatische oder alicyclische Phosphine, wobei als spezifische Beispiele folgende Phosphine genannt seien:

Niedrige Trialkylphosphine, wie
Trimethylphosphin, Triethylphosphin, Tripropylphosphin, Tributylphosphin,
gemischte niedrige Alkylphenylphosphine, wie
Phenyldimethylphosphin, Phenyldiethylphosphin, Phenyldipropylphosphin,
Diphenylmethylphosphin, Diphenylethylphosphin, Diphenylpropylphosphin, Triphenylphosphin,
alicyclische Phosphine, wie
Tetramethylenmethylphosphin und dergleichen.

Die verwendete Säure kann eine beliebige Säure sein, die ein quarternäres Phosphoniumsalz bildet. Bevorzugt ist die Säure aber eine organische Carbonsäure. Beispiele von geeigneten Säuren sind Borsäure, Milchsäure, Ameisensäure, Essigsäure, Propionsäure, Buttersäure, Salzsäure, Phosphorsäure und Schwefelsäure.

Die Säure soll bevorzugt eine Dissoziationskonstante von größer als etwa $10^{-5}$ haben.

Das Verhältnis von Phosphin zur Säure ist nicht besonders kritisch. Da ein Äquivalent Säure zur Bildung von einem Mol Phosphoniumgruppe erforderlich ist, wird bevorzugt mindestens etwa ein Äquivalent Säure für jedes Mol der gewünschten Umwandlung von Phosphin zu Phosphonium verwendet.

Die Phosphin/Säuremischung und die Epoxidverbindung werden umgesetzt, indem die Komponenten gemischt werden, wobei manchmal auf mäßig erhöhte Temperaturen erwärmt wird. Die Reaktionstemperatur ist nicht besonders kritisch, und sie wird in Abhängigkeit von den Ausgangsstoffen und ihren Reaktionsgeschwindigkeiten gewählt. Häufig verläuft die Reaktion bei Raumtemperatur oder bei bis auf 70°C erhöhten Temperaturen befriedigend schnell. In manchen Fällen ist es ratsam, höhere Temperaturen wie von etwa 110°C oder höher zu verwenden. Ein Lösungsmittel ist nicht notwendig, obwohl es häufig zur besseren Kontrolle der Reaktion verwendet werden kann. Beispiele von geeigneten Lösungsmitteln sind aromatische Kohlenwasserstoffe, Monoalkyläther von Äthylenglykol und aliphatische Alkohole. Die Mengenanteile des Phosphins und der Epoxidverbindung können variiert werden, und die optimalen Anteile hängen von den speziellen Ausgangsstoffen ab. Üblicherweise werden aber etwa 1 bis etwa 50 Gewichtsteile Phosphin auf 100 Gewichtsteile der Epoxidverbindung verwendet. Die Mengenanteile werden häufig unter Bezugnahme auf den Anteil an Phosphin angegeben, wobei typischerweise etwa 0,1 bis etwa 35 Gew.-% Phosphin, bezogen auf das Gesamtgewicht von Phosphin und Epoxidverbindung verwendet werden.

Harze mit Sulfoniumgruppen kann man herstellen, indem man die vorstehend charakterisierten Epoxyverbindungen mit einem Sulfid in Gegenwart einer Säure unter Bildung eines Harzes mit Gruppen einer quaternären Sulfoniumbase umsetzt.

Als Sulfide können beliebige Sulfide verwendet werden, die mit Epoxygruppen reagieren und keine Gruppen enthalten, die die Umsetzung stören. Das Sulfid kann ein aliphatisches, gemischtes aliphatisch aromatisches, aralkylisches oder cyclisches Sulfid sein. Beispiele von solchen Sulfiden sind Dialkylsulfide, wie Diethylsulfid, Dipropylsulfid, Dibutylsulfid, Dihexylsulfid oder Alkylphenylsulfide, wie Diphenylsulfid, Ethylphenylsulfid, alicyclische Sulfide, wie Tetramethylensulfid, Pentamethylensulfid, Hydroxyalkylsulfide, wie Thiodiethanol, Thiodipropanol, Thiodibutanol und dergleichen.

Als Säure kann eine beliebige Säure verwendet werden, die ein quaternäres Sulfoniumsalz bildet. Bevorzugt ist die Säure aber eine organische Carbonsäure. Beispiele von geeigneten Säuren sind Borsäure, Ameisensäure, Milchsäure, Essigsäure, Propionsäure, Buttersäure, Salzsäure, Phosphorsäure und Schwefelsäure. Die Säure hat bevorzugt eine Diisoziationskonstante von größer als etwa $1 \times 10^{-5}$.

Das Verhältnis von Sulfid zu Säure ist nicht besonders kritisch. Da ein Äquivalent Säure für die Bildung eines Mols einer Sulfoniumgruppe verwendet wird, wird bevorzugt mindestens ein Äquivalent Säure für jedes gewünschte Mol der Umwandlung von Sulfid zu Sulfonium verwendet.

Die Sulfid/Säuremischung und die Epoxidverbindung werden umgesetzt, indem man die Komponenten mischt und in der Regel auf mäßig erhöhte Temperaturen, wie 70 bis 110°C, erwärmt. Ein Lösungsmittel ist nicht notwendig, obwohl häufig eines verwendet wird, um eine bessere Kontrolle der Reaktion zu erreichen. Geeignete Lösungsmittel sind aromatische Kohlenwasserstoffe, Monoalkylether von Ethylenglykol und aliphatische Alkohole. Die Mengenanteile des Sulfids und der Epoxidverbindung können variiert werden, und die optimalen Verhältnisse der beiden Komponenten hängen von den speziellen Ausgangsstoffen ab. Üblicherweise werden aber etwa 1 bis 50 Gewichtsteile Sulfid auf 100 Gewichtsteile der Epoxyverbindung verwendet. Die Mengenverhältnisse werden häufig auf den Gehalt an Schwefel bezogen, der typischerweise bei etwa 0,1 bis 35%, bezogen auf das Gesamtgewicht des Sulfids und der Epoxyverbindung, liegt.

Da das Sulfid oder das Phosphin mit der Epoxygruppe reagieren, wird, wenn bevorzugte epoxygruppenhaltige Produkte erwünscht sind, weniger als ein Äquivalent an Sulfid oder Phosphin verwendet, so daß das erhaltene Harz noch eine Epoxygruppe pro Durchschnittsmolekül enthält. Wenn man Bor in das Harzmolekül einführen möchte, kann dies als Aminborat oder als stickstoffhaltiger Ester erfolgen. Die Umsetzung der Borverbindung kann gleichzeitig mit der Bildung der Sulfonium- oder Phosphoniumgruppen erfolgen, da die Reaktionsbedingungen ähnlich sind.

Die speziellen Ausgangsstoffe, Mengenanteile und Reaktionsbedingungen werden in Übereinstimmung mit den gut bekannten Erfahrungen so ausgewählt, daß eine Gelierung des Produktes während der Reaktion vermieden wird. So werden z. B. übermäßig aggressive Reaktionsbedingungen nicht verwendet. In ähnlicher Weise werden Ausgangsstoffe mit reaktionsfähigen Substituenten, die sich mit den Epoxyverbindungen umsetzen können, nicht benutzt, da sie die Reaktion nachteilig beeinflussen können.

Um unter Verwendung der erfindungsgemäßen Bindemittel hochbeständige Überzüge zu erhalten, ist es vorteilhaft, dem Elektrotauchlack ein Vernetzungsmittel zuzusetzen, das bei erhöhten Temperaturen die Vernetzung des Bindemittels bewirkt, oder das Bindemittel so zu modifizieren, daß es reaktive Gruppen enthält, die bei erhöhten Temperaturen eine Selbstvernetzung bewirken. Ein selbstvernetzendes System kann vorteilhaft dadurch erhalten werden, daß das Bindemittel mit einem teilblockierten Polyisocyanat, das im Durchschnitt eine freie Isocyanatgruppe pro Molekül besitzt und dessen blockierte Isocyanatgruppen bei Raumtemperatur beständig sind und bei erhöhten Temperaturen entblockt werden und mit den durch die Öffnung der Epoxidringe entstandenen Hydroxylgruppen und Urethanbildung reagieren. Das Bindemittel kann durch den Einsatz der bereits beschriebenen Mannich-Basen als Komponente D selbstvernetzbar sein.

Häufig angewandte Methoden zur Vernetzung von Bindemitteln sind z. B. in folgenden Offenlegungsschriften publiziert: DE—OS 2 057 799, europäische Patentanmeldungen 12 463 und 4 090 und DE-OS 2 752 256.

Wenn Vernetzungsmittel benutzt werden, machen sie in der Regel etwa 5 bis etwa 60 Gew.-% des Bindemittels aus. Bevorzugt sind etwa 20 bis etwa 40 Gew.-% des Bindemittels.

Beispiele von geeigneten Aminoplastvernetzungsmitteln sind der Hexamethylether von Hexamethylolmelamin, der Triethyltrimethylether von Hexamethylolmelamin, der Hexabutylether von Hexamethylolmelamin und der Hexamethylether von Hexamethylolmelamin und polymere butylierte Melaminformaldehydharze.

Man kann Harnstoff-Aldehydvernetzungsmittel in bekannter Weise herstellen, indem man Harnstoff und einen Aldehyd bis zur Resolstufe umsetzt und das Umsetzungsprodukt mit einem Alkohol unter sauren Bedingungen alkyliert, wobei man ein alkyliertes Harnstoffaldehydharz erhält. Ein Beispiel von einem geeigneten Vernetzungsmittel auf Basis eines Harnstoffaldehydharzes ist ein butyliertes Harnstofformaldehydharz.

Als Vernetzungsmittel können auch blockierte Polyisocyanate eingesetzt werden. Es können bei der Erfindung beliebige Polyisocyanate benutzt werden, bei denen die Isocyanatgruppen mit einer Verbindung umgesetzt worden sind, so daß das gebildete blockierte Polyisocyanat gegenüber Hydroxylgruppen bei Raumtemperatur beständig ist, bei erhöhten Temperaturen, in der Regel im Bereich von etwa 90 bis etwa 300°C, aber reagiert. Bei der Herstellung der blockierten Polyisocyanate können beliebige für die Vernetzung geeignete organische Polyisocyanate verwendet werden. Bevorzugt sind die Isocyanate, die etwa 3 bis etwa 36, insbesondere etwa 8 bis etwa 15 Kohlenstoffatome enthalten. Beispiele von geeigneten Diisocyanaten sind Trimethylendiisocyanat, Tetramethylendiisocyanat,
Pentamethylendiisocyanat, Hexamethylendiisocyanat, Propylendiisocyanat,
Ethylethylendiisocyanat, 2,3-Dimethylethylendiisocyanat, 1-Methyltrimethylendiisocyanat,
1,3-Cyclopentylendiisocyanat, 1,4-Cyclohexylendiisocyanat, 1,2-Cyclohexylendiisocyanat,
1,3-Phenylendiisocyanat, 1,4-Phenylendiisocyanat, 2,4-Toluylendiisocyanat,
2,6-Toluylendiisocyanat, 4,4'-Biphenylendiisocyanat, 1,5-Naphthylendiisocyanat,
1,4-Naphthylendiisocyanat, 1-Isocyanatomethyl-5-isocyanato-1,3,3-trimethylcyclohexan,
bis(4-Isocyanatocyclohexyl)methan, bis(4-Isocyanatophenyl)methan,
4,4'-Diisocyanatodiphenylether und 2,3-bis(8-Isocyanatooctyl)-4-octyl-5-hexylcyclohexen.

Es können auch Polyisocyanate von höherer Isocyanatfunktionalität verwendet werden. Beispiele dafür sind
tris(4-Isocyanatophenyl)methan, 1,3,5-Triisocyanatobenzol, 2,4,6-Triisocyanatotoluol,
1,3,5-tris(6-Isocyanatohexyl)biuret, bis(2,5-Diisocyanato-4-methylphenyl)methan
und polymere Polyisocyanate, wie Dimere und Trimere von Diisocyanatotoluol. Ferner kann man auch Mischungen von Polyisocyanaten benutzen.

Die bei der Erfindung als Vernetzungsmittel in Betracht kommenden organischen Polyisocyanate können auch Präpolymere sein, die sich beispielsweise von einem Polyol einschließlich eines Polyetherpolyols oder eines Polyesterpolyols ableiten. Dazu werden bekanntlich Polyole mit einem Überschuß von Polyisocyanaten umgesetzt, wodurch Präpolymere mit Isocyanatgruppen entstehen. Beispiele von Polyolen, die hierfür verwendet werden können, sind einfache Polyole, wie Glykole, z. B. Ethylenglykol und Propylenglykol, und andere Polyole, wie Glycerin, Trimethylolpropan, Hexantriol

und Pentaerythrit; ferner Monoether, wie Diethylenglykol und Tripropylenglykol sowie Polyether, die Kondensate solcher Polyole mit Alkylenoxiden sind. Beispiele von Alkylenoxiden, die sich für die Kondensation mit diesen Polyolen unter Bildung von Polyethern eignen, sind Ethylenoxid, Propylenoxid, Butylenoxid und Styroloxid. Man bezeichnet diese Kondensate im allgemeinen als Polyether mit endständigen Hydroxylgruppen. Sie können linear oder verzweigt sein. Beispiele von solchen Polyethern sind Polyoxyethylenglykol von einem Molekulargewicht von 1540, Polyoxypropylenglykol mit einem Molekulargewicht von 1025, Polyoxytetramethylenglykol, Polyoxyhexamethylenglykol, Polyoxynonamethylenglykol, Polyoxydecamethylenglykol, Polyoxydodecamethylenglykol und Mischungen davon. Andere Typen von Polyoxyalkylenglykolethern können ebenfalls verwendet werden. Besonders geeignete Polyetherpolyole sind diejenigen, die man erhält durch Umsetzung von derartigen Polyolen, wie Ethylenglykol, Diethylenglykol, Triethylenglykol, 1,4-Butandiol, 1,3-Butandiol, 1,6-Hexandiol und Mischungen davon; Glycerintrimethylolethan, Trimethylolpropan, 1,2,6-Hexantriol, Polypentaerythrit, Dipentaerythrit, Tripentaerythrit, Polypentaerythrit, Methylglukosiden und Saccharose mit Alkylenen, wie Ethylenoxid, Propylenoxid oder Mischungen davon.

Für die Blockierung der Polyisocyanate können beliebige geeignete aliphatische, cycloaliphatische oder aromatische Alkylmonoalkohole verwendet werden. Beispiele dafür sind aliphatische Alkohole, wie Methyl-, Ethyl-, Chlorethyl-, Propyl-, Butyl-, Amyl-, Hexyl-, Heptyl-, Octyl-, Nonyl-, 3,3,5-Trimethylhexyl-, Decyl- und Laurylalkohol; cycloaliphatische Alkohole, wie Cyclopentanol und Cyclohexanol; aromatische Alkylalkohole, wie Phenylcarbinol und Methylphenylcarbinol. Es können auch geringe Anteile an höhermolekularen und relativ schwer flüchtigen Monoalkoholen gegebenenfalls mitverwendet werden, wobei diese Alkohole nach ihrer Abspaltung als Weichmacher in den Überzügen wirken.

Andere geeignete Blockierungsmittel sind Hydroxylamine, wie Ethanolamin und Oxime, wie Methylethylketonoxim, Acetonoxim und Cyclohexanonoxim.

Die blockierten Polyisocyanate werden hergestellt, indem man eine ausreichende Menge eines Alkohols mit dem organischen Polyisocyanat umsetzt, so daß keine freien Isocyanatgruppen mehr vorhanden sind. Die Umsetzung zwischen dem organischen Polyisocyanat und dem Blockierungsmittel ist exotherm. Deshalb werden das Polyisocyanat und das Blockierungsmittel bevorzugt bei einer Temperatur, die nicht höher ist als 80°C, insbesondere niedriger als 50°C ist, gemischt, um dem exothermen Effekt entgegenzuwirken.

Die genannten Polyisocyanate und Blockierungsmittel können bei geeigneten Mengenverhältnissen auch zur Herstellung der oben beschriebenen teilblockierten Polyisocyanate verwendet werden.

Die Erfindung betrifft auch ein Verfahren zur Herstellung von Bindemitteln für kationische Elektrotauchlacke auf der Basis von Umsetzungsprodukten von modifizierten Epoxidharzen und primären, sekundären und/oder tertiären Aminen sowie Ammoniumsalzen oder Sulfid/Säure- bzw. Phosphin/Säuremischungen, die ggf. Vernetzungsmittel, Pigmente, Verlaufmittel und andere übliche Hilfsmittel enthalten und ist dadurch gekennzeichnet, daß

(A) niedermolekulare, aromatische Gruppen enthaltende Epoxidharze mit einem Epoxidäquivalentgewicht unter 375 mit
(B) aliphatischen und/oder alicyclischen polyfunktionellen Alkoholen oder Carbonsäuren mit einem Molekulargewicht unter 350 unter Addition an die Epoxidgruppe derart umgesetzt werden, daß die Umsetzungsprodukte einen Anteil an aromatischen Gruppen, berechnet als Phenylengruppe, von 10—45% enthalten und diese Umsetzungsprodukte mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 sowie zur Erzielung der erforderlichen Wasserdispergierbarkeit mit
(D) primären, sekundären und/oder tertiären Aminen und/oder deren Salzen oder einer Sulfid/Säure- oder Phosphin/Säuremischung weiter modifiziert werden.

Vorteilhafte Ausgestaltungen des erfindungsgemäßen Verfahrens ergeben sich aus den Ansprüchen 13 bis 22.

Das Verfahren wird folgendermaßen durchgeführt: Die Komponente A und die Komponente B werden gemischt und ggf. unter Hinzugabe von Katalysatoren, wie z. B. tertiären Aminen, bei Temperaturen zwischen 100 und 140°C, vorzugsweise 115 bis 135°C, vollständig umgesetzt. Die Umsetzung kann anhand des Epoxidäquivalentgewichtes überprüft werden. Dieses Reaktionsprodukt aus den Komponenten A und B wird mit der Komponente C bei Temperaturen zwischen 100 und 140°C weiter modifiziert. Auch diese Umsetzung kann anhand des Epoxidäquivalentgewichtes kontrolliert werden. Das so erhaltene Reaktionsprodukt enthält noch freie Epoxidgruppen. Für diesen Reaktionsschritt können die gleichen Katalysatoren verwendet werden wie bei der Umsetzung der Komponenten A und B. Das so erhaltene Reaktionsprodukt wird mit der Komponente D bei Temperaturen zwischen 90 und 120°C umgesetzt, so daß ein Bindemittel entsteht, das basische Aminogruppen enthält. Das basische Reaktionsprodukt kann durch Zugabe von Säuren ganz oder teilweise protonisiert werden und anschließend in Wasser dispergiert werden. Das Vernetzungsmittel kann vor der Dispergierung in Wasser dem Bindemittel zugemischt werden oder je nach Reaktivität während der Herstellung des Bindemittels zugeführt werden. Im Falle von teilblockierten Polyisocyanaten werden diese bei Temperaturen zwischen 80 und 150° C, vorzugsweise bei Temperaturen zwischen 100 und 130° C, mit dem Bindemittel umgesetzt. Die erhaltenen Bindemittel stellen stabile gut handhabbare Dispersionen dar. Gegebenenfalls kann es auch zweckmäßig sein, vor der Dispersionsherstellung die Bindemittel in geeigneten organischen Lösungsmitteln zu lösen. Geeignete Lösungsmittel sind z. B. Glykolether, Ethylglykol, Butylglykol, Ketone, wie Ethyldiethylketon, Methylethylketon, Methylisobutylketon und andere.

Die Erfindung betrifft ferner die Verwendung der Bindemittel für Elektrotauchbäder.

Die Elektrotauchbäder können übliche Pigmente enthalten. Häufig wird den Pigmenten ein Dispergiermittel oder ein oberflächenaktives Mittel zugesetzt. Das Pigment und das gegebenenfalls verwendete oberflächenaktive Mittel werden zusammen in einem Teil des Bindemittels oder allein gemahlen, um eine Paste herzustellen, die mit dem restlichen Bindemittel zur Herstellung der Überzugsmasse verschnitten wird.

In manchen Fällen ist es vorteilhaft, dem Elektrotauchbad ein nicht ionisches Modifizierungsmittel oder Lösungsmittel zuzusetzen, um die Dispergierbarkeit, die Viskosität und/oder die Filmqualität zu verbessern. Beispiele von solchen Materialien sind aliphatische, naphthenische und aromatische Kohlenwasserstoffe oder Mischungen davon; Mono- und Dialkylether von Glykolen, sibirisches Fichtennadelöl und andere Lösungsmittel, die mit dem Harzsystem verträglich sind. Das zur Zeit bevorzugte Modifizierungsmittel ist 4-Methoxy-4-methylpentanon-2.

Dem Elektrotauchbad können außerdem noch andere Zusatzstoffe, wie Antioxidantien zugesetzt werden. Beispiele dafür sind ortho-Amylphenol oder Kresol. Die Zugabe solcher Antioxidantien ist dann besonders erwünscht, wenn die Abscheidungsbäder atmosphärischem Sauerstoff bei erhöhten Temperaturen unter Rühren für längere Zeiträume ausgesetzt sind.

Andere Zusätze, die das Bad gegebenenfalls enthalten kann, sind Netzmittel, wie Erdölsulfonate, sulfatierte Fettamine oder ihre Amide, Ester von Natriumisothionaten, Alkylphenoxypolyethylenalkanole oder Phosphatester, einschließlich von ethoxilierten Alkylphenolphosphaten. Andere Gruppen von möglichen Zusätzen sind Antischaummittel und Suspendiermittel. Für die Formulierung des Abscheidungsbades kann normales Leitungswasser verwendet werden. Da ein derartiges Wasser aber relativ hohe Anteile an Salzen enthält, können dadurch unerwünschte Änderungen bei der elektrischen Abscheidung auftreten. Es wird deshalb im allgemeinen entionisiertes Wasser bevorzugt.

Die vorstehend aufgeführten möglichen Zusätze sind nicht vollständig, da beliebige andere Zusätze, die bei der elektrischen Abscheidung nicht stören, benutzt werden können.

Die Erfindung betrifft weiterhin ein Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, das dadurch gekennzeichnet ist, daß die Bindemittel erhalten worden sind durch Umsetzung von

(A) niedermolekularen, aromatische Gruppen enthaltenden Epoxidharzen mit einem Epoxidäquivalentgewicht unter 375,
(B) aliphatischen und/oder alicyclischen polyfunktionellen Alkoholen und/oder Carbonsäuren mit einem Molekulargewicht unter 350, wobei das Umsetzungsprodukt aus A und B einen Gehalt an aromatischen Gruppen, berechnet als Phenylengruppe, von 10—45% enthält, weitere Umsetzung mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 und weitere Umsetzung mit
(D) primären, sekundären und/oder tertiären Aminen und/oder deren Salzen oder einer Sulfid/Säuremischung oder einer Phosphin/Säuremischung.

Vorteilhafte Ausgestaltungen des Verfahrens zum elektrophoretischen Beschichten ergeben sich aus den Unteransprüchen 25 bis 33.

Als Substrat kann bei der elektrischen Abscheidung ein beliebiges elektrisch leitendes Substrat dienen. Üblicherweise handelt es sich dabei um Metallsubstrate, wie z. B. Eisen, Stahl, Kupfer, Zink, Messing, Zinn, Nickel, Chrom und Aluminium sowie um andere Metalle, vorbehandelte Metalle, ferner phosphatierte oder chromatierte Metalle. Auch imprägniertes Papier und andere leitende Substrate können benutzt werden.

Bei der kationischen Abscheidung werden die zu überziehenden Gegenstände in eine wäßrige Dispersion des solubilisierten filmbildenden kationischen Bindemittels eingetaucht. Es wird eine elektrische Spannung zwischen dem zu überziehenden Gegenstand, der als Kathode dient, und einer Anode angelegt und das kationische Bindemittel wird durch den elektrischen Strom auf der Kathode abgeschieden. Der Gegenstand wird dann aus dem Bad entnommen und in der Regel abgespült. Dann wird der Überzug in üblicher Weise durch Erwärmen ausgehärtet.

Die Erfindung wird in den folgenden Beispielen noch näher erläutert. Alle Angaben über Teile und Prozentsätze sind Gewichtsangaben, falls nicht ausdrücklich etwas anderes festgestellt wird.

## Beispiel 1—5

### Herstellung der Bindemittel

Im folgenden wird die Herstellung der Bindemittel allgemein beschrieben, wobei die im einzelnen verwendeten Komponenten und ihre Einwaagen der Tabelle 1 zu entnehmen sind.

Ein Reaktor, der mit einer Heizeinrichtung, einem Rührer, einem Thermometer, einem Kühler und einer Stickstoffeinleitung ausgestattet ist, wird mit der Epoxidharzkomponente A und der Komponente B sowie 0,54 Gew.-% Dimethylbenzylamin bezogen auf die Einwaage der Komponente A beschickt. Die Temperatur wird auf 131°C angehoben und die Reaktion durchgeführt, bis das der Stöchiometrie entsprechende Epoxidäquivalentgewicht erreicht ist (Stufe 1). Danach werden die Komponente C, 80%ig in Xylol angelöst, und 0,41 Gew.-% Dimethylbenzylamin, bezogen auf die Einwaage der Komponente A, zugegeben. Die Reaktionstemperatur von 131°C wird beibehalten bis das der Stöchiometrie entsprechende Epoxidäquivalentgewicht erreicht ist (Stufe 2). Danach werden 33 Gew.-%, auf den Festkörper bezogen, der in Beispiel 9 beschriebenen Vernetzerlösung zugegeben. Durch externe Kühlung bringt man den Reaktionsansatz auf 90°C und fügt 9,9 Gew.-% des durch Umsetzung von Diethylentriamin mit Methylisobutylketon erhaltenen Ketimins und 7,8 Gew.-% N-Methylethanolamin zu. Man läßt die Temperaturen auf 112°C ansteigen und hält eine Stunde diese Temperatur. Danach werden 6,5 Gew.-% 2-Ethoxiäthanol zugegeben und 15 Minuten untergemischt. Danach kann die Harzlösung in Wasser dispergiert werden. Hierzu hat man eine Mischung aus entionisiertem Wasser, Eisessig und einer handelsüblichen Emulgatorlösung vorbereitet. Die Menge Eisessig wird so festgelegt, daß 33% der im Harzmolekül enthaltenen Stickstoffatome protonisierbar sind. Die Menge entionisiertes Wasser ist so berechnet, daß man eine 55%ige Dispersion erhält. Die Harzlösung wird in diese wäßrige Mischung eingerührt. Die Temperatur muß hierbei unterhalb 50°C liegen. Nach 4 Stunden wird der Dispersion eine weitere Menge entionisiertes Wasser zugegeben, um einen Festkörper der Dispersion von 36% einzustellen.

In der Tabelle 1 bedeutet EEW Epoxidäquivalentgewicht.

Tabelle 1

| | Komponente A | Einwaage A (g) | Komponente B | Einwaage B (g) | EEW 1. Stufe | Komponente C | Einwaage C (g) | EEW 2. Stufe |
|---|---|---|---|---|---|---|---|---|
| Harz 1 | handelsübliches Epoxidharz auf Basis Bisphenol A mit einem Epoxidäquivalentgewicht von 188 | 1337 | 1,6-Hexandiol | 210 | 435 | Neopentylglykol-Adipinsäure-Polyester mit einer OH-Zahl von 220 | 453 | 1125 |
| Harz 2 | handelsübliches Epoxidharz auf Basis Bisphenol A mit einem Epoxidäquivalentgewicht von 188 | 1357 | Neopentylglykol | 181,5 | 428 | handelsübliches Polylactonpolyol mit einem Molekulargewicht von 550 | 462 | 1121 |
| Harz 3 | handelsübliches Epoxidharz auf Basis Bisphenol A mit einem Epoxidäquivalentgewicht von 188 | 1244 | 2-Methyl-2-propyl-1,3-propandiol | 218,7 | 442 | Polytetrahydrofuran mit einem Molekulargewicht von 650 | 538 | 1209 |
| Harz 4 | handelsübliches Epoxidharz auf Basis Bisphenol A mit einem Epoxidäquivalentgewicht von 188 | 1282 | Adipinsäure | 249 | 449 | handelsübliches Polylactonpolyol mit einem Molekulargewicht von 530 | 469 | 1173 |
| Harz 5 | handelsübliches Epoxidharz auf Basis Bisphenol A mit einem Epoxidäquivalentgewicht von 188 | 1341 | Dimethylmalonsäure | 173,5 | 442 | Polyetherpolyurethan mit einer OH-Zahl von 87,6 | 840 | 1524 |

Beispiel 6

Darstellung eines Polyetherurethans als Komponente C

In einem Reaktionsgefäß mit Innenthermometer, Rührer, Rückflußkühler, Tropftrichter und Schutzgaseinleitung werden bei Raumtemperatur 1226, 4 Teile Polyglykol (Molekulargewicht = 200) vorgelegt. Hierzu tropft man langsam über einen Zeitraum von 4 Stunden 773,6 Teile Hexamethylendiisocyanat. Durch externe Kühlung hält man die Reaktionstemperatur unter 40° C. Man läßt die Reaktionsmischung noch 1 h bei 40° C nachreagieren und beendet nach weiteren 2 Stunden bei einer Temperatur von 60° C die Additionsreaktion. Das Produkt weist einen NCO-Gehalt <0,05% auf, die OH-Zahl beträgt 87,6. Das Polyurethan ist bei Raumtemperatur von wachsartiger Konsistenz.

Beispiel 7

Darstellung eines Vernetzungsmittels

Ein Reaktor, der mit einer Heizvorrichtung, einem Kühler, einem Rührer, einem Thermometer, einer Ausgangsleitung, die zu einer Waschvorrichtung führt, und einer Einrichtung zum Einleiten von Stickstoff ausgerüstet ist, wird mit 12 280 Teilen Toluylendiisocyanat (Mischung aus etwa 80% 2,4-Toluylendiisocyanat und etwa 20% 2,6-Toluylendiisocyanat) beschickt. Es wird Stickstoff eingeleitet und der Kühler wird eingeschaltet. Im Verlauf von 5 Stunden werden 5550,5 Teile 2-Äthylhexanol allmählich zugegeben, wobei die Temperatur allmählich auf 50° C steigt. Während die Temperatur von 50° C aufrechterhalten wird, werden weitere 3649,5 Teile 2-Äthylhexanol im Verlauf von 4 Stunden zugegeben. Die Reaktionsmischung wird 75 Minuten bei 50° C gehalten, dann wird der Kühler abgeschaltet und es werden 3,6 Teile Dibutylzinndilaurat zugegeben. Die Heizvorrichtung wird angeschaltet und die Reaktionsmischung wird im Verlauf von 45 Minuten auf 65,6° C erwärmt. Im Verlauf von zwei Stunden und 50 Minuten werden 3184 Teile 1,1,1-Trimethylolpropan zugegeben, wobei die Temperatur von 65,6 auf 120° C steigt. Die Reaktionsmischung wird bei dieser Temperatur 90 Minuten gehalten, dann werden 10 560 Teile 2-Ethoxiethanol zugegeben. Das entstandene Produkt ist eine Lösung eines Pulyurethanvernetzungsmittels.

Beispiel 8

Darstellung eines Mahlbindemittels und einer Pigmentpaste

Ein Reaktor, der mit einer Heizvorrichtung, einem Kühler, einem Rührer und einer Stickstoffeinleitung ausgerüstet ist, wird mit 1948 g Bisphenol-A-diglycidylether und 817 g 2-Dimethyl-3-hydroxypropyl-2-dimethyl-3-hydroxypropionat beschickt. Der Ansatz wird nun erhitzt und die Temperatur bei 132° C gehalten, bis das Epoxidäquivalentgewicht von 1350 erreicht ist. Dann werden 675 g einer 90%igen Lösung in Methylisobutylketon des halbverkappten Diisocyanats aus 2-Ethylhexanol und Toluylendiisocyanat zugesetzt. Hierzu gibt man nun langsam 3109 g Butylglykol und kühlt auf 80° C ab. Inzwischen wurde folgendes Ammoniumsalz vorbereitet: In 40,4 Teilen Butylglykol werden das Umsetzungsprodukt auf 89,9 Teilen Diethanolamin mit 330,9 Teilen eines halbverkappten Diisocyanats aus 2-Ethylhexanol und Toluylendiisocyanat (95%ig in Methylisobutylketon) mit einer Mischung aus 121,3 Teilen 88%iger Milchsäure und 95,7 Teilen entionisiertem Wasser neutralisiert. Von diesem Ammoniumsalz werden 884,1 g zugefügt. Dann werden nochmals 220 g Butylglykol zugegeben und der Ansatz für 4 Stunden bei 80° C gehalten. Anschließend wird die Harzlösung filtriert.

Danach wird eine klare Lösung von 224 g Harzlösung, 419 g entionisiertem Wasser und 3,2 g Dibutylzinnoxid hergestellt. In einer Mühle wird auf eine Hegman-Feinheit 7 gemahlen und die Mahlung danach filtriert.

Die Pigmentpaste wird aus folgenden Komponenten formuliert: 387 g der Harzlösung werden mit 631 g entionisiertem Wasser, 387 g Aluminiumsilikat, 68 g Bleisilikat und 54,2 g Ruß gemischt. Die Mischung wird 15 Minuten auf einer Cowles-Mühle angemahlen. Danach werden 34 g Strontiumchromat zugesetzt. Danach wird das Material in einer Mühle auf eine Hegman-Feinheit 7 gemahlen. Es werden noch 55,5 g der oben beschriebenen, klaren Lösung zugemischt. Die Mischung wird filtriert und als schwarze Pigmentpaste eingesetzt.

Beispiel 9—15

Bereitung der Abscheidebäder und Beschichtung von Blechen

Die in den Beispielen 1—5 beschriebenen Harzdispersionen wurden mit der im Beispiel 8 beschriebenen Pigmentpaste nach folgender Rezeptur komplettiert:

| | |
|---|---|
| 2100 g | Harzdispersion |
| 710 g | Pigmentpaste |
| 25 g | Essigsäure 10%ig |
| 2165 g | Wasser |

Die Abscheidung des Lackfilms auf den als Kathode geschalteten Blechen erfolgte mit 260 V bei 25° C über eine Zeitdauer von 120 Sec. Danach wurden die Bleche aus dem Abscheidebad entnommen, mit entionisiertem Wasser abgespült und mit Luft trockengeblasen. Die Aushärtung des Lackfilms erfolgte in einem Umlufttrockenschrank bei 180° C während 20 Minuten. Alle Bleche waren danach mit einem hochwertigen, dickschichtigen Grundierlackfilm überzogen. Die Ergebnisse sind in der Tabelle 2 zusammengefaßt.

In der Tabelle 2 bedeuten:

Bonder 127,
Bonder 132 und
Granodine 902: handelsübliche zinkphosphatierte Stahlbleche
Haftung: GT 0 = sehr gute Haftung
GT 5 = schlechte Haftung

Wie die Tabelle 2 zeigt, ergeben die Bindemittel Beschichtungen mit einer Schichtdicke von 30 bis 47 µm nach dem Einbrennen. Diese Werte liegen deutlich über den in der DE-OS 2 701 002 angegebenen Schichtdicken. Die eingebrannten Beschichtungen zeigen eine sehr glatte bis glatte Oberfläche, eine sehr gute Haftung und eine sehr gute bis gute Elastizität.

Tabelle 2

| | Schicht-dicke µm | Substrat | Aussehen nach Härtung | Haftung GT | Elasti-zität |
|---|---|---|---|---|---|
| Harzdisp. 1 | 30 | Bonder 132 | glatte Oberfläche | 0 | gut |
| Harzdisp. 2 | 36 | Bonder 132 | sehr glatte Oberfläche | 0 | sehr gut |
| Harzdisp. 3 | 47 | Bonder 132 | sehr glatte Oberfläche | 0 | sehr gut |
| Harzdisp. 4 | 34 | Granodine 902 | sehr glatte Oberfläche | 0 | gut |
| Harzdisp. 5 | 45 | Bonder 127 | glatte Oberfläche | 0 | sehr gut |
| Harzdisp. 6 | 42 | Bonder 132 | sehr glatter Oberfläche | 0 | sehr gut |
| Harzdisp. 7 | 38 | Granodine | glatte Oberfläche | 0 | sehr gut |

**Patentansprüche**

1. Wasserdispergierbare Bindemittel für kationische Elektrotauchlacke auf der Basis von modifizierten Epoxidharzen, die Ammonium-, Sulfonium- und/oder Phosphoniumgruppen enthalten, dadurch gekennzeichnet, daß sie erhalten worden sind durch Umsetzung von

(A) niedermolekularen, aromatische Gruppen enthaltenden Epoxidharzen mit einem Epoxidäquivalentgewicht unter 375,

(B) aliphatischen und/oder alicyclischen polyfunktionellen Alkoholen und/oder Carbonsäuren mit einem Molekulargewicht unter 350, wobei das Umsetzungsprodukt aus A und B einen Gehalt an aromatischen Gruppen, berechnet als Phenylengruppe, von 10—45% enthält, weitere Umsetzung mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 und weitere Umsetzung mit
(D) primären, sekundären und/oder tertiären Aminen und/oder deren Salzen oder einer Sulfid-Säuremischung oder eine Phosphin/Säuremischung.

2. Bindemittel nach Anspruch 1, dadurch gekennzeichnet, daß die Komponente A ein Epoxidharz auf Basis Bisphenol A ist.
3. Bindemittel nach Anspruch 1, dadurch gekennzeichnet, daß die Komponente A ein Polyglycidylester ist.
4. Bindemittel nach Anspruch 1—3, dadurch gekennzeichnet, daß die Komponente B ein Diol oder eine Dicarbonsäure mit einer verzweigten aliphatischen Kette ist.
5. Bindemittel nach Anspruch 1—4, dadurch gekennzeichnet, daß die Komponente B ein Diol oder eine Dicarbonsäure mit mindestens einer Neostruktur ist.
6. Bindemittel nach Anspruch 1 bis 5, dadurch gekennzeichnet, daß das Molekulargewicht der Komponente C 530—3000 beträgt.
7. Bindemittel nach Anspruch 1—6, dadurch gekennzeichnet, daß die Komponente C ein linearer Polyester ist.
8. Bindemittel nach Anspruch 1—6, dadurch gekennzeichnet, daß die Komponente C ein linearer Polyether ist.
9. Bindemittel nach Anspruch 1—6, dadurch gekennzeichnet, daß die Komponente C ein lineares Polyurethan, ein lineares Polyamid oder eine lineare Dicarbonsäure ist.
10. Bindemittel nach Anspruch 1—6, dadurch gekennzeichnet, daß die Komponente C ein Polythioether ist.
11. Bindemittel nach Anspruch 1—10, dadurch gekennzeichnet, daß sie mit einem teilblockierten Polyisocyanat, das im Durchschnitt eine freie Isocyanatgruppe pro Molekül besitzt und dessen blokkierte Isocyanatgruppen bei Raumtemperatur beständig sind, umgesetzt worden sind.
12. Verfahren zur Herstellung von Bindemitteln für kationische Elektrotauchlacke auf der Basis von Umsetzungsprodukten von modifizierten Epoxidharzen und primären, sekundären und/oder tertiären Aminen sowie Ammoniumsalzen oder Sulfid/Säure- bzw. Phosphin/Säuremischungen, die gegebenenfalls Vernetzungsmittel, Pigmente, Verlaufmittel und andere übliche Hilfsmittel enthalten, dadurch gekennzeichnet, daß

(A) niedermolekulare, aromatische Gruppen enthaltende Epoxidharze mit einem Epoxidäquivalentgewicht unter 375 mit
(B) aliphatischen und/oder alicyclischen polyfunktionellen Alkoholen oder Carbonsäuren mit einem Molekulargewicht unter 350 unter Addition an die Epoxidgruppe derart umgesetzt werden, daß die Umsetzungsprodukte einen Anteil an aromatischen Gruppen, berechnet als Phenylengruppe, von 10—45% enthalten und diese Umsetzungsprodukte mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 sowie zur Erzielung der erforderlichen Wasserdispergierbarkeit mit
(D) primären, sekundären und/oder tertiären Aminen und/oder deren Salzen oder einer Sulfid/Säure- oder Phosphin/Säuremischung weiter modifiziert werden.

13. Verfahren nach Anspruch 12, dadurch gekennzeichnet, daß als Komponente A Epoxidharz auf Basis Bisphenol A verwendet werden.
14. Verfahren nach Anspruch 12, dadurch gekennzeichnet, daß als Epoxidharze Polyglycidylester verwendet werden.
15. Verfahren nach Anspruch 12—14, dadurch gekennzeichnet, daß als Komponente B ein Diol oder eine Dicarbonsäure mit einer verzweigten aliphatischen Kette verwendet wird.
16. Verfahren nach Anspruch 12—15, dadurch gekennzeichnet, daß als Komponente B ein Diol oder eine Dicarbonsäure mit mindestens einer Neostruktur verwendet wird.
17. Verfahren nach Anspruch 12—16, dadurch gekennzeichnet, daß das Molekulargewicht der Komponente C 530—3000 beträgt.
18. Verfahren nach Anspruch 12—17, dadurch gekennzeichnet, daß die Komponente C ein linearer Polyester ist.
19. Verfahren nach Anspruch 12—17, dadurch gekennzeichnet, daß die Komponente C ein linearer Polyether ist.
20. Verfahren nach Anspruch 12—17, dadurch gekennzeichnet, daß die Komponente C ein linearer Polyurethan, ein lineares Polyamid oder eine lineare Dicarbonsäure ist.

21. Verfahren nach Anspruch 12—17, dadurch gekennzeichnet, daß die Komponente C ein Polythioether ist.

22. Verfahren nach Anspruch 12—21, dadurch gekennzeichnet, daß das Reaktionsprodukt der Komponenten A, B, C und D mit einem teilblockierten Polyisocyanat, das im Durchschnitt eine freie Isocyanatgruppe pro Molekül besitzt und dessen blockierte Isocyanatgruppen bei Raumtemperatur beständig sind, umgesetzt wird.

23. Verwendung der Bindemittel nach Anspruch 1—11 für Elektrotauchbäder.

24. Verfahren zum elektrophoretischen Beschichten eines elektrisch leitenden als Kathode geschalteten Substrats aus einem wäßrigen Bad auf Basis mindestens teilweise mit Säuren neutralisierter kationischer Bindemittel, wobei die Bindemittel durch Umsetzung selbstvernetzbar gemacht worden sind oder das Bad ein zusätzliches Vernetzungsmittel enthält, dadurch gekennzeichnet, daß die Bindemittel erhalten worden sind durch Umsetzung von

(A) niedermolekularen, aromatischen Gruppen enthaltenden Epoxidharzen mit einem Epoxidäquivalentgewicht unter 375,
(B) aliphatischen und/oder alicyclischen polyfunktionellen Alkoholen und/oder Carbonsäuren mit einem Molekulargewicht unter 350, wobei das Umsetzungsprodukt aus A und B einen Gehalt an aromatischen Gruppen, berechnet als Phenylengruppe, von 10—45% enthält, weitere Umsetzung mit
(C) 10—50 Gew.-%, bezogen auf das gesamte Bindemittel, polyfunktionellen Alkoholen, Carbonsäuren und/oder SH-Verbindungen mit einem Molekulargewicht von 500—5000 und weitere Umsetzung mit
(D) primären, sekundären und/oder tertiären Aminen und/oder deren Salzen oder einer Sulfid/Säuremischung oder einer Phosphin/Säuremischung.

25. Verfahren nach Anspruch 24, dadurch gekennzeichnet, daß die Komponente A ein Epoxidharz auf Basis Bisphenol ist.

26. Verfahren nach Anspruch 24, dadurch gekennzeichnet, daß die Komponente A ein Polyglycidylester ist.

27. Verfahren nach Anspruch 24—26, dadurch gekennzeichnet, daß die Komponente B ein Diol oder eine Dicarbonsäure mit einer verzweigten aliphatischen Kette ist.

28. Verfahren nach Anspruch 24—27, dadurch gekennzeichnet, daß die Komponente B ein Diol oder eine Dicarbonsäure mit mindestens einer Neostruktur ist.

29. Verfahren nach Anspruch 24—28, dadurch gekennzeichnet, daß das Molekulargewicht der Komponente C 530—3000 beträgt.

30. Verfahren nach Anspruch 24—29, dadurch gekennzeichnet, daß die Komponente C ein linearer Polyester ist.

31. Verfahren nach Anspruch 24—29, dadurch gekennzeichnet, daß die Komponente C ein linearer Polyether ist.

32. Verfahren nach Anspruch 24—29, dadurch gekennzeichnet, daß die Komponente C ein lineares Polyurethan, ein lineares Polyamid oder eine lineare Dicarbonsäure ist.

33. Verfahren nach Anspruch 24—29, dadurch gekennzeichnet, daß die Komponente C ein Polythioether ist.

**Claims**

1. Water-dispersible binder for cationic electrocoating finishes and based on modified epoxide resins containing ammonium, sulfonium and/or phosphonium groups, characterized by that they have been manufactured by reacting

(A) low molecular weight epoxide resins containing aromatic groups and having an epoxide equivalent weight of below 375,
(B) aliphatic and/or alicyclic polyfunctional alcohols and/or carboxylic acids having a molecular weight of below 350, the reaction product of A and B containing 10—45% of aromatic groups, calculated as the phenylene group, further reacting with
(C) 10—50% by weight, relative to the total binder, of polyfunctional alcohols, carboxylic acids and/or SH compounds having a molecular weight of 500—5000 and further reacting with
(D) primary, secondary and/or tertiary amines and/or salts thereof or a sulfide/acid mixture or a phosphine/acid mixture.

2. A binder as claimed in claim 1, wherein component A is an epoxide resin based on bisphenol A.

3. A binder as claimed in claim 1, wherein component A is a polyglycidyl ester.

4. A binder as claimed in claims 1—3. wherein component B is a diol or a dicarboxylic acid having a branched aliphatic chain.

5. A binder as claimed in claims 1—4, wherein component B is a diol or a dicarboxylic acid having at least one neo structure.

6. A binder as claimed in claims 1—5, wherein the molecular weight of component C is 530—3000.

7. A binder as claimed in claims 1—6, wherein component C is a linear polyester.

8. A binder as claimed in claims 1—6, wherein component C is a linear polyether.

9. A binder as claimed in claims 1—6, wherein component C is a linear polyurethane, a linear polyamide or a linear dicarboxylic acid.

10. A binder as claimed in claims 1—6, wherein component C is a polythioether.

11. A binder as claimed in claims 1—10, which has been reacted with a partially blocked polyisocyanate which, on average, has one free isocyanate group per molecule and the blocked isocyanate groups of which are stable at room temperature.

12. A process for preparing binders for cationic electrocoating finishes, which binders are based on reaction products of modified epoxide resin and primary, secondary and/or tertiary amines and ammonium salts or sulfide/acid or phosphine/acid mixtures, which reaction products may contain crosslinking agents, pigments, flow control agents and other customary auxiliaries, which process comprises reacting

(A) low molecular weight epoxide resins containing aromatic groups and having an epoxide equivalent weight of below 375 with

(B) aliphatic and/or alicyclic polyfunctional alcohols or carboxylic acids having a molecular weight of below 350 with addition to the epoxide group in such a way that the reaction products contain a proportion of aromatic groups, calculated as the phenylene group, of 10—45%, and further modifying these reaction products by

(C) 10—50% by weight, relative to the total binder, of polyfunctional alcohols, carboxylic acids and/or SH compounds having a molecular weight of 500—5000 and, to obtain the required dispersibility in water, by

(D) primary, secondary and/or tertiary amines and/or their salts or a sulfide/acid mixture or phosphine/acid mixture.

13. A process as claimed in claim 12, wherein epoxide resins based in bisphenol A are used as component A.

14. A process as claimed in claim 12, wherein polyglycidyl esters are used as epoxide resins.

15. A process as claimed in claims 12—14, wherein a diol or a dicarboxylic acid having a branched aliphatic chain is used as component B.

16. A process as claimed in claims 12—15, wherein a diol or a dicarboxylic acid having at least one neo structure is used as component B.

17. A process as claimed in claims 12—16, wherein the molecular weight of component C is 530—3,000.

18. A process as claimed in claims 12—17, wherein component C is a linear polyester.

19. A process as claimed in claims 12—17, wherein component C is a linear polyether.

20. A process as claimed in claims 12—17, wherein component C is a linear polyurethane, a linear polyamide or a linear dicarboxylic acid.

21. A process as claimed in claims 12—17, wherein component C is a polythioether.

22. A process as claimed in claims 12—21, wherein the reaction product of component A, B, C and D is reacted with a partially blocked polyisocyanate which, on average, has one free isocyanate group per molecule and the blocked isocyanate groups of which are stable at room temperature.

23. The use of a binder as claimed in claims 1—11, for electrocoating baths.

24. A process for electrophoretically coating an electrically conductive substrate connected as the cathode from an aqueous bath based on cationic binders which have been at least partially neutralized with acids, the binders having been rendered, by reaction, self-crosslinkable or the bath containing an additional crosslinking agent, wherein the binders are the products of reacting

(A) low molecular weight epoxide resins containing aromatic groups and having an epoxide equivalent weight of below 375

(B) aliphatic and/or alicyclic polyfunctional alcohols and/or carboxylic acids having a molecular weight of below 350, the reaction product of A and B containing 10—45% of aromatic groups, calculated as the phenylene group, further reacting with

(C) 10—50% by weight, relative to the total binder, of polyfunctional alcohols, carboxylic acids and/or SH compounds having a molecular weight of 500—5000 and further reacting with

(D) primary, secondary and/or tertiary amines and/or salts thereof or a sulfide/acid mixture or a phosphine/acid mixture.

25. A process as claimed in claim 24, wherein component A is an epoxide resin based on bisphenol A.

26. A process as claimed in claim 24, wherein component A is a polyglycidyl ester.

27. A process as claimed in claims 24—26, wherein component B is a diol or a dicarboxylic acid

having a branched aliphatic chain.

28. A process as claimed in claims 24—27, wherein component B is a diol or a dicarboxylic acid having at least one neo structure.

29. A process as claimed in claims 24—28, wherein the molecular weight of component C is 530—3000.

30. A process as claimed in claims 24—29, wherein component C is a linear polyester.

31. A process as claimed in claims 24—29, wherein component C is a linear polyether.

32. A process as claimed in claims 24—29, wherein component C is a linear polyurethane, a linear polyamide or a linear dicarboxylic acid.

33. A process as claimed in claims 24—29, wherein component C is a polythioether.

**Revendications**

1. Liants dispersables à l'eau, pour peintures cationiques pour électrodéposition, à base de résines époxydes modifiées, qui contiennent des groupes ammonium, sulfonium et/ou phoshonium, caractérisés en ce qu'ils ont été obtenus par réaction

(A) de résines époxydes à faible masse moléculaire, contenant des groupes aromatiques, ayant une masse équivalente d'époxyde inférieure à 375,
(B) d'alcools et/ou d'acides carboxyliques polyfonctionnels aliphatiques et/ou alicycliques ayant une masse moléculaire inférieure à 350, le produit de la réaction de A et B ayant une teneur en groupes aromatiques, calculée en tant que groupe phénylène, de 10 à 45%, réaction supplémentaire avec
(C) 10—50% en poids, sur la base de la totalité du liant, d'alcools, acides carboxyliques et/ou composés SH polyfonctionnels ayant une masse moleculaire comprise entre 500 et 5000, et réaction supplémentaire
(D) avec des amines primaires, secondaires et/ou tertiaires et/ou leurs sels ou un mélange sulfureacide ou un mélange phosphine/acide.

2. Liants selon la revendication 1, caractérisés en ce que le composant A est une résine époxyde à base de bisphénol A.

3. Liants selon la revendication 1, caractérisés en ce que le composant A est un ester polyglycidylique.

4. Liants selon l'une quelconque des revendications 1 à 3, caractérisés en ce que le composant B est un diol ou un acide dicarboxylique ayant une chaîne aliphatique ramifiée.

5. Liants selon l'une quelconque des revendications 1 à 4, caractérisés en ce que le composant B est un diol ou un acide dicarboxylique ayant au moins une structure néo.

6. Liants selon l'une quelconque des revendications 1 à 5, caractérisés en ce que la masse moléculaire du composant C est de 530 à 3000.

7. Liants selon l'une quelconque des revendications 1 à 6, caractérisés en ce que le composant C est un polyester linéaire.

8. Liants selon l'une quelconque des revendications 1 à 6, caractérisés en ce que le composant C est un polyéther linéaire.

9. Liants selon l'une quelconque des revendications 1 à 6, caractérisés en ce que le composant C est un polyuréthanne linéaire, un polyamide linéaire ou un acide dicarboxylique linéaire.

10. Liants selon l'une quelconque des revendications 1 à 6, caractérisés en ce que le composant C est un polythioéther.

11. Liants selon l'une quelconque des revendications 1 à 10, caractérisés en ce qu'ils ont été mis à réagir avec un polyisocyanate partiellement bloqué, qui possède en moyenne un groupe isocyanate par molécule et dont les groupes isocyanate bloqués sont stables à la température ambiante.

12. Procédé pour la préparation de liants pour peintures cationiques pour électrodéposition à base de produits de réaction de résines époxydes modifiées et d'amines primaires, secondaires et/ou tertiaires, ainso que sels d'ammonium ou mélanges sulfure/acide ou phosphine/acide, qui contiennent éventuellement des agent de réticulation, des pigments, des agents d'étalement et d'autres adjuvants habituels, caractérisé en ce que l'on fait réagir

(A) des résines époxydes à faible masse moléculaire, contenant des groupes aromatiques, ayant une masse équivalente d'époxyde inférieure à 375, sur
(B) des alcools ou acides carboxyliques polyfonctionels aliphatiques et/ou alicycliques ayant une masse moléculaire inférieure à 350, par addition au groupe époxyde, de telle sorte que les produits de réaction contiennent 10 à 45% de groupes aromatiques, calculés en tant que groupe phénylène, et que l'on continue à modifier ces produits de réaction
(C) avec 10—50% en poids, sur la base de la totalité du liant, d'alcools, acides carboxyliques et/ou composés SH polyfonctionnels ayant une masse moléculaire de 500—5000 et, pour obtenir la dispersabilité nécessaire à l'eau,

(D) avec des amines primaires, secondaires et/ou tertiaires et/ou leurs acides ou un mélange sulfure/acide ou phosphine/acide.

13. Procédé selon la revendication 12, caractérisé en ce qu'on utilise en tant que composant A des résines époxydes à base de bisphénol A.

14. Procédé selon la revendication 12, caractérisé en ce qu'n utilise en tant que résines époxydes des esters polyglycidyliques.

15. Procédé selon l'une quelconque des revendications 12 à 14, caractérisé en ce qu'on utilise en tant que composant B un diol ou un acide dicarboxylique ayant une chaîne aliphatique ramifiée.

16. Procédé selon l'une quelconque des revendications 12 à 15, caractérisé en ce qu'on utilise en tant que composant B un diol ou un acide dicarboxylique ayant au moins une structure néo.

17. Procédé selon l'une quelconque des revendications 12 à 16, caractérisé en ce que la masse moléculaire du composant C est de 530 à 3000.

18. Procédé selon l'une quelconque des revendications 12 à 17, caractérisé en ce que le composant C est un polyester linéaire.

19. Procédé selon l'une quelconque des revendications 12 à 17, caractérisé en ce que le composant C est un polyéther linéaire.

20. Procédé selon l'une quelconque des revendications 12 à 17, caractérisé en ce que le composant C est un polyuréthanne linéaire, un polyamide linéaire ou un acide dicarboxylique linéaire.

21. Procédé selon l'une quelconque des revendications 12 à 17, caractérisé en ce que le composant C est un polythioéther.

22. Procédé selon l'une quelconque des revendications 12 à 21, caractérisé en ce que le produit de réaction des composants A, B, C et D est mis à réagir avec un polyisocyante partiellement bloqué, qui possède en moyenne un groupe isocyanate libre par molécule, et dont les groupes isocyanate bloqués sont stables à la température ambiante.

23. Utilisation des liants selon l'une quelconque des revendications 1 à 11 pour bains d'électrodéposition.

24. Procédé pour le revêtement électrophorétique d'un substrat éléctroconducteur monté en cathode, à partir d'un bain aqueux à base de liants cationiques au moins partiellement neutralisés par des acides, les liants ayant été rendus auto-réticulables par la réaction, ou bien le bain contenant un agent de réticulation supplémentaire, caractérisé en ce que les liants ont été obtenus par réaction

(A) de résines époxydes à faible masse moléculaire, contenant des groupes aromatiques, ayant une masse équivalente d'époxyde inférieure à 375,
(B) d'alcools et/ou acides carboxyliques polyfonctionnels aliphatiques et/ou alicycliques ayant une masse moléculaire inférieure à 350, le produit de réaction de A et B ayant une teneur de 10 à 45% de groupes aromatiques, calculés en tant que groupe phénylène, et par réaction supplémentaire
(C) sur 10—50% en poids, sur la base de la totalité du liant, d'alcools, acides carboxyliques et/ou composés SH polyfonctionnels ayant une masse moléculaire de 500 à 5000, et une réaction supplémentaire
(D) avec des amines primaires, secondaires et/ou tertiaires et/ou leurs sels ou un mélange sulfure/acide ou un mélange phosphine/acide.

25. Procédé selon la revendication 24, caractérisé en ce que le composant A est une résine époxyde à base de bisphénol A.

26. Procédé selon la revendication 24, caractérisé en ce que le composant A est un ester polyglycidylique.

27. Procédé selon l'une quelconque des revendications 24 à 26, caractérisé en ce que le composant B est un diol ou un acide dicarboxylique ayant une chaîne aliphatique ramifiée.

28. Procédé selon l'une quelconque des revendications 24 à 27, caractérisé en ce que le composant B est un diol ou un acide dicarboxylique ayant au moins une structure néo.

29. Procédé selon l'une quelconque des revendications 24 à 28, caractérisé en ce que la masse moléculaire du composant C est de 530—3000.

30. Procédé selon l'une quelconque des revendications 24 à 29, caractérisé en ce que le composant C est un polyester linéaire.

31. Procédé selon l'une quelconque des revendications 24 à 29, caractérisé en ce que le composant C est un polyéther linéaire.

32. Procédé selon l'une quelconque des revendications 24 à 29, caractérisé en ce que le composant C est un polyuréthanne linéaire, un polyamide linéaire ou un acide dicarboxylique linéaire.

33. Procédé selon l'une quelconque des revendications 24 à 29, caractérisé en ce que le composant C est un polythioéther.